# EUROPÄISCHE PATENTSCHRIFT

(11) **EP 4 001 604 B1**
(45) Veröffentlichungstag und Bekanntmachung des Hinweises auf die Patenterteilung: **17.01.2024**
(21) Anmeldenummer: 21203326.0
(22) Anmeldetag: 19.10.2021
(51) Int. Cl.: F01N 11/00, F01N 3/20

(54) **VERFAHREN ZUR FUNKTIONSÜBERPRÜFUNG AN EINEM VERBRENNUNGSMOTOR MIT ADDITIVEINSPRITZUNG, STEUERGERÄT UND KRAFTFAHRZEUG**
METHOD FOR FUNCTIONAL CHECKING THE QUALITY OF A COMBUSTION ENGINE WITH ADDITIVE INJECTION, CONTROL DEVICE AND MOTOR VEHICLE
PROCÉDÉ DE CONTRÔLE DE FONCTIONNEMENT D'UN MOTEUR À COMBUSTION INTERNE À INJECTION D'ADDITIF, APPAREIL DE COMMANDE ET VÉHICULE AUTOMOBILE

(30) Priorität: 16.11.2020 DE 102020130167
(43) Veröffentlichungstag der Anmeldung: 25.05.2022
(73) Patentinhaber: Bayerische Motoren Werke Aktiengesellschaft, 80809 München (DE)
(72) Erfinder: Wolf, Markus, 80997 München (DE); Bruhn, Andreas, 82178 Puchheim (DE); Huebl, Manfred, 4591 Molln (AT)

(56) Entgegenhaltungen:
- EP-A1- 2 141 331
- WO-A1-2012/138936
- DE-A1-102015 117 633
- DE-A1-102016 209 832

## Beschreibung

Die vorliegende Erfindung betrifft ein Verfahren zur Funktionsüberprüfung - auch als Gutprüfung bezeichnet - einer Funktionalität eines Kraftfahrzeugs, bei der eine Einspritzung eines Additivs in einen Abgasstrom vorgesehen ist. Die Erfindung betrifft weiter ein entsprechendes Steuergerät und ein damit ausgestattetes Kraftfahrzeug.

Kraftfahrzeuge sind heutzutage komplexe Konglomerate aus einer Vielzahl von Komponenten und Funktionen. Damit ist es praktisch unvermeidlich, dass es zu Fehlern kommen kann, beispielsweise aufgrund von Bauteilbeschädigungen oder Verschleiß. Ist ein solcher Fehler aufgetreten, so muss dieser behoben werden und danach eine Überprüfung dahingehend durchgeführt werden, ob der Fehler tatsächlich behoben, also die ursprüngliche Funktionalität wiederhergestellt ist, um einen sicheren und zuverlässigen Betrieb des Kraftfahrzeugs so weit wie möglich sicherzustellen.

Mit einer Erkennung, welcher Fehler vorliegt, befasst sich beispielsweise die DE 10 2015 117 633 A1. Dort ist eine Versagen-Bestimmungsvorrichtung für ein Emissionssteuergerät eines Verbrennungsmotors beschrieben. Diese enthält ein erstes Zufuhrventil, um einer Abgasleitung ein Reduktionsmittel zuzuführen, und einen ersten selektiven NOx-Reduktionskatalysator sowie stromabwärts davon angeordnet ein zweites Zufuhrventil und einen zweiten selektiven Nox-Reduktionskatalysator und einen NOx-Sensor. Eine Steuerung kann dann eine Zufuhrmenge des Reduktionsmittels bestimmen, eine korrespondierende Anweisung bzgl. der Zufuhrmenge an die Zufuhrventile ausgeben und letztlich bestimmen, ob das erste oder das zweite Zufuhrventil abnormal ist.

Als weiteres Beispiel beschreibt die EP 2 141 331 A1 eine Abgasreinigungsvorrichtung einer Verbrennungskraftmaschine, in deren Abgasstrang ein Zuführventil für wässrige Urealösung und ein NOₓ-Selektivreduktionskatalysator angeordnet sind. Anhand von Erfassungsergebnissen zur NOₓ-Reinigungsrate sowie der Zuführmenge und Konzentration der Urealösung werden dann Abnormalitäten des Katalysators, eines Zuführsystems für die Urealösung und der Urealösung beurteilt.

Die WO 2012 / 138 936 A1 beschreibt ein System mit einem internen Verbrennungsmotor und einem NOₓ-Reduktionssystem. Das NOₓ-Reduktionssystem umfasst einen SCR-Katalysator und einen Reduktionsmittelinjektor. Weiter sind dort Mittel vorgesehen zum Ermitteln eines Fehlers in dem Reduktionsmittelinjektor, dem SCR-Katalysator oder dem Reduktionsmittel.

Aus der DE 10 2016 209 832 A1 ist ein Verfahren zum Überprüfen eines Dosiersystems für einen bei niedrigen Umgebungstemperaturen erstarrenden Zusatzstoff insbesondere zum Abgas eines Verbrennungsmotors bekannt. Dabei wird im Rahmen einer Gutprüfroutine ein Dosierventil eines entsprechenden Systems zur Beigabe des Zusatzstoffes angesteuert und auf Funktionsfähigkeit überprüft. Ferner werden sämtliche elektrischen Heizeinheiten aktiviert und auf Funktionsfähigkeit überprüft, wonach eine Fördereinheit für den Zusatzstoff für eine definierte Zeitspanne aktiviert und deren Funktionsfähigkeit durch Drucküberwachung in einer zu einem Dosierventil führenden Dosierleitung und Vergleich des gemessenen Drucks mit einem Druckaufbau-Sollwertebereich überprüft wird. Danach wird bei abgeschalteter Fördereinheit für den Zusatzstoff mittels Drucküberprüfung während einer definierten Zeitspanne ein Leckagetest durchgeführt, innerhalb dessen praktisch kein Druckabbau erfolgen darf. Anschließend erfolgt ein Dosiermengentest. Sämtliche elektrischen und logischen Diagnosen, die für die Gutprüfung notwendig sind, werden von der elektrischen Steuereinheit ausgeführt und interpretiert.

Als weiteres Beispiel ist aus der DE 10 2017 206 906 A1 ein Verfahren zur Ermittlung einer Genauigkeit einer Reduktionsmittellösungsdosierung in einen Abgasstrom eines Verbrennungsmotors stromaufwärts eines SCR-Katalysators und/oder einer Konzentration der dosierten Reduktionsmittellösung bekannt. Dabei erfolgt die Ermittlung der Genauigkeit und/oder der Konzentration in mindestens einem Zeitraum durch einen Vergleich einer modellierten Ammoniakfüllstandsänderung des SCR-Katalysators mit einer Ammoniakfüllstandsänderung des SCR-Katalysators, die mittels Mikrowellen gemessen wird.

Mit einem ähnlichen technischen Gebiet befasst sich auch die DE 10 2008 052 227 A1, in der eine Diagnose von Reduktionsmitteleinspritzanlagen thematisiert ist. Dort ist ein Verfahren zum Steuern des Betriebs einer Reduktionsmitteleinspritzanlage mit einer Pumpe, einem Einspritzventil und einem sich stromaufwärts des Einspritzventils in der Reduktionsmitteleinspritzanlage befindlichen Drucksensor beschrieben. Dieses Verfahren umfasst unter Motorstartbedingungen ein Deaktivieren der Pumpe, ein Öffnen des Einspritzventils und ein Anzeigen einer Degradation des Sensors, wenn die Sensorausgabe während des Betriebs mit deaktivierter Pumpe und geöffnetem Einspritzventil von dem Abgasdruck abweicht. Dies beruht auf der Erkenntnis, dass es beispielsweise aufgrund der kaustischen Umgebung in der Abgasreinigungsanlage zu einer Degradation eines oder mehrerer Drucksensoren in der Abgasreinigungsanlage kommen kann.

Aufgabe der vorliegenden Erfindung ist es, eine besonders effiziente Gutprüfung an einem Kraftfahrzeug mit Abgas-Additiveinspritzung zu ermöglichen, die Probleme in einem jeweils nachfolgenden Betrieb reduziert.

Diese Aufgabe wird erfindungsgemäß durch die Gegenstände der unabhängigen Patentansprüche gelöst. Mögliche Ausgestaltungen und Weiterbildungen der vorliegenden Erfindung sind in den abhängigen Patentansprüchen, in der Beschreibung und in der Zeichnung angegeben.

Das erfindungsgemäße Verfahren dient, ist also ausgebildet zur Funktionsüberprüfung einer Funktionalität, also einer Funktion und/oder einer Komponente, eines Kraftfahrzeugs mit einem Verbrennungsmotor. Das Verfahren bzw. die Funktionsüberprüfung bezieht sich dabei auf Funktionalitäten, bei deren Ausführung im fehlerfreien Normalfall ein Additiv in einen Abgasstrom des Kraftfahrzeugs bzw. des Verbrennungsmotors eingebracht wird.

Das Additiv wird dabei für eine selektive katalytische Reduktion (englisch: selective catalyctic reduction, SCR) im Rahmen einer Abgasnachbehandlung in den Abgasstrom eingebracht werden. Bei dem Additiv kann es sich also beispielsweise um ein Reduktionsmittel, wie etwa eine wässrige Harnstofflösung oder dergleichen, wie es beispielsweise unter der Bezeichnung AdBlue bekannt ist, handeln. Die Funktionsüberprüfung wird dabei nach Detektion eines Fehlers der entsprechenden Funktionalität oder einer damit in Zusammenhang stehenden Funktionalität oder Komponente durchgeführt. Insbesondere kann die Funktionsüberprüfung angewendet werden, nachdem eine Maßnahme zur Behebung des Fehlers durchgeführt wurde und/oder seit einer erstmaligen oder letztmalig in Detektion des Fehlers wenigstens eine vorgegebene Zeitspanne vergangen ist und/oder beispielsweise ein Ausschalten und eine erneute Inbetriebnahme des Kraftfahrzeugs bzw. des Verbrennungsmotors erfolgt ist. Die Funktionsüberprüfung dient hier also dazu, zu bestimmen, ob der Fehler nach wie vor vorliegt oder behoben wurde, also nicht mehr vorliegt. Dementsprechend wird die Funktionsüberprüfung hier auch als Gutprüfung bezeichnet.

In dem erfindungsgemäßen Verfahren wird in Abhängigkeit von dem jeweiligen Fehler bzw. einer Art oder einem Typ des jeweiligen Fehlers eine für die Funktionsüberprüfung zu verwendende Menge des Additivs anhand einer entsprechenden vorgegebenen Zuordnung bestimmt. Diese vorgegebene Zuordnung ordnet unterschiedlichen Fehlern bzw. Fehlerarten oder Fehlertypen unterschiedliche bei der jeweiligen Funktionsüberprüfung zu verwendende Mengen des Additivs zu. Dies kann eine direkte Zuordnung zwischen unterschiedlichen Fehlern und unterschiedlichen für die Gut- oder Funktionsüberprüfung zu verwendenden Mengen des Additivs sein. Die damit bestimmte Menge des Additivs kann dann zum Beispiel als Parameterwert in einer entsprechenden Prüfroutine für die Funktionsüberprüfung gesetzt werden. Mit anderen Worten kann dann also eine vorgegebene, beispielsweise in einem Steuergerät oder Datenspeicher des Kraftfahrzeugs hinterlegte, Prüfroutine hinsichtlich der bei ihrer Ausführung oder Anwendung einzubringenden Menge des Additivs in Abhängigkeit von dem jeweiligen Fehler angepasst werden. Ebenso kann es sich bei der Zuordnung um eine in gewisser Weise indirekte Zuordnung handeln. Dabei kann beispielsweise unterschiedlichen Fehlern jeweils eine von mehreren unterschiedlichen vorgegebenen Prüfroutinen, die unterschiedliche zu verwendende Mengen des Additivs vorsehen, zugeordnet sein. In Abhängigkeit von dem jeweiligen Fehler kann dann eine dieser vorgegebenen Prüfroutinen zur Anwendung, also zur Verwendung im Rahmen der jeweiligen Funktionsüberprüfung, ausgewählt werden. Da die unterschiedlichen vorgegebenen Prüfroutinen unterschiedliche Mengen des Additivs vorsehen, stellt auch dies effektiv eine Zuordnung zwischen dem jeweiligen Fehler und der für dessen Gutprüfung einzusetzenden Menge des Additivs dar.

Durch die vorgegebene Zuordnung wird vorliegend Fehlern, die eine Dosiermenge und/oder eine Dosiergenauigkeit des Additivs betreffen, eine erste Menge des Additivs zugeordnet. Fehlern, die eine Nichteinbringung des Additivs, also beispielsweise einen Totalausfall des Injektors oder eine Blockierung einer Einspritzleitung, also die Fragestellung, ob überhaupt Additiv gefördert oder eingebracht werden kann, betreffen, wird durch die vorgegebene Zuordnung hingegen eine zweite Menge des Additivs zugeordnet. Die erste Menge des Additivs ist dabei größer als die zweite Menge des Additivs. Mit anderen Worten sind also wenigstens zwei unterschiedliche zu verwendende Mengen des Additivs definiert. Dabei kann die erste Menge beispielsweise im Bereich von 2 g bis 7 g und die zweite Menge beispielsweise im Bereich von 300 mg bis 900 mg liegen. Dies verdeutlicht, dass bereits durch eine derartige Klassifikation oder Einstufung der Fehler in zwei Klassen, Gruppen oder Kategorien gegebenenfalls mehrere 100 % des Additivs eingespart werden können, die dann nicht gehandhabt werden müssen. Ebenso kann jedoch eine feinere fehlerabhängige Aufschlüsselung oder Abstufung mit mehr als zwei unterschiedlichen vorgegebenen Mengen zu verwendenden Additivs vorgesehen sein, um eine insgesamt besonders effiziente und robuste Funktionsüberprüfung zu ermöglichen.

Weiter wird in dem erfindungsgemäßen Verfahren die Funktionsüberprüfung dann unter Einbringung der für den jeweiligen Fehler bestimmten Menge des Additivs, also gegebenenfalls unter Ausführung der entsprechend angepassten oder ausgewählten Prüfroutine, durchgeführt, um zu bestimmen, ob der jeweilige Fehler weiterhin besteht.

Bei dem erfindungsgemäßen Verfahren handelt es sich also um ein Verfahren zur Funktionsprüfung einer Abgasanlage eines Kraftfahrzeugs, im Rahmen von dessen Ausführung die Additiveinspritzung in der Abgasanlage überwacht wird. Das erfindungsgemäße Verfahren kann also bei oder nach Fehlern eines Einspritz- oder Dosiersystems der Abgasanlage für das Additiv angewendet werden. Ebenso kann das Verfahren aber beispielsweise auch für Fehler von anderen Funktionen und/oder Komponenten, insbesondere im Bereich der Abgasanlage des Kraftfahrzeugs, angewendet werden, deren Betrieb mit einem Einbringen des Additivs verknüpft ist bzw. ein solches Einbringen erfordert. Insbesondere kann das erfindungsgemäße Verfahren auch für Fehler bzw. zur Gutprüfung von Funktionalitäten und/oder Komponenten angewendet werden, die oder deren Funktion eine Abhängigkeit von einer eingebrachten Menge des Additivs aufweisen.

Bisher erfolgt eine Gut- oder Funktionsüberprüfung typischerweise über eine vereinheitlichte, also für alle unterschiedlichen Fehler gleiche Prüfroutine, die eine Dosierung einer bestimmten definierten Menge des Additivs vorsieht. Dies bedingt, dass die einheitliche Prüfroutine die größte Menge des Additivs vorsieht, die zur Gutprüfung irgendeines Fehlers bzw. für alle mengenabhängigen Diagnosen erforderlich ist. Bei allen anderen Fehlern kann ein anschließendes Ausbringen dieser relativ großen Menge des Additivs jedoch problematisch sein. Um solche Probleme zu vermeiden, wird bisher oftmals ein jeweiliger Injektor, also eine Einspritzeinrichtung für das Additiv, aus dem Kraftfahrzeug ausgebaut und während der jeweiligen Gutprüfung unverbrauchtes Additiv aufgefangen. Dies kann jedoch einen erheblichen Zeit- und Arbeitsaufwand bedeuten. So kann es dazu beispielsweise notwendig sein, den Verbrennungsmotor und ein Getriebe abzusenken, was allein mit mehreren Stunden Arbeitsaufwand verbunden sein kann.

Stattdessen findet bei der vorliegenden Erfindung eine fehlerabhängige oder fehlerselektive Prüfroutine Anwendung. Dadurch kann je nach Fehler die Gutprüfung mit einer im Vergleich zum herkömmlichen Verfahren reduzierten Menge des Additivs durchgeführt werden. Dies vermeidet ohne signifikanten Zeit- und Arbeitsaufwand eine Überdosierung des Additivs während der Funktionsüberprüfung und somit eine Ansammlung von Additiv-Rückständen, eine Versottung und/oder eine sonstige Schädigung einer Abgasanlage des jeweiligen Kraftfahrzeugs durch zu viel eindosiertes Additiv. Auch wird durch die vorliegende Erfindung vermieden, dass ein nachfolgender Betrieb, beispielsweise durch erst dann verdampfendes, bei der vorausgehenden Funktionsüberprüfung zu viel eingebrachtes Additiv beeinflusst wird. So kann beispielsweise eine Verfälschung von nachfolgenden Überprüfungen vermieden oder reduziert werden.

In einer möglichen Ausgestaltung der vorliegenden Erfindung wird der jeweilige Fehler automatisch in einen Fehlerspeicher eingetragen und erst dann daraus gelöscht, also ausgetragen, oder zur Löschung daraus freigegeben, wenn die jeweilige Funktionsüberprüfung wenigstens eine, insbesondere fehlerabhängige, vorgegebene Anzahl von Malen ergeben hat, dass der jeweilige Fehler nicht mehr vorliegt, also behoben wurde. Auf diese Weise kann ein besonders sicherer und zuverlässiger Betrieb des Kraftfahrzeugs erreicht werden. Wird dabei fehlerabhängig vorgegeben, wie oft die Funktionsprüfung mit positivem Ergebnis, also ohne Detektion des jeweiligen Fehlers, durchgeführt oder durchlaufen werden muss, kann beispielsweise je nach Schwere oder Einfluss der Fehleraufwand eingespart und/oder eine Sicherheit und Zuverlässigkeit im Betrieb des Kraftfahrzeugs verbessert werden. Die vorgegebene Anzahl kann also für unterschiedliche Fehler unterschiedlich sein. Dabei kann die Anzahl minimal 1 betragen, aber - insbesondere für besonders schwerwiegende oder gegebenenfalls nur sporadisch oder unter spezifischen Bedingungen auftretende Fehler - größer als 1 sein.

In einer weiteren möglichen Ausgestaltung der vorliegenden Erfindung wird für die Fehler ein jeweils zugeordneter Fehlercode in einem Fehlerspeicher eingetragen. Die Zuordnung der zu verwendenden Menge des Additivs erfolgt dann anhand dieses jeweiligen Fehlercodes. Mit anderen Worten bildet die Zuordnung also die vorgegebenen Fehlercodes auf eine zu verwendende Menge des Additivs, beispielsweise eine im Rahmen der jeweiligen Gutprüfung einzubringenden Mindestmenge des Additivs, ab. Die Fehlercodes können beispielsweise vorgegebene Nummern oder identifizierende Zeichenketten sein. Dies ermöglicht vorteilhaft eine besonders aufwandsarme und robuste Datenverarbeitung. Der Fehlerspeicher kann beispielsweise ein computerlesbarer Datenspeicher sein, der beispielsweise Teil eines fahrzeugeigenen Diagnosegeräts (OBD, On-Board Diagnose) oder Steuergeräts des Kraftfahrzeugs sein kann. Auf diese Weise kann standortunabhängig sichergestellt werden, dass Fehler zuverlässig erfasst und schließlich gehandhabt werden können.

In einer weiteren möglichen Ausgestaltung der vorliegenden Erfindung ordnet die vorgegebene Zuordnung unterschiedlichen Fehlern jeweils eine von mehreren vorgegebenen unterschiedlichen Prüfroutinen zu. Diese unterschiedlichen Prüfroutinen unterscheiden sich dabei voneinander nicht nur hinsichtlich der zu verwendenden Menge des Additivs, sondern auch hinsichtlich einer Einspritzprozedur für das Additiv, eines vorgesehenen Massenstroms des Additivs während der Anwendung der jeweiligen Prüfroutine, einer Einspritzfrequenz des Additivs und/oder einer Aufteilung der zu verwendenden Menge des Additivs auf mehrere Einspritzvorgänge während der Anwendung der jeweiligen Prüfroutine. Die Einspritzprozedur kann dabei beispielsweise definieren, wie viel des Additivs wie schnell eingespritzt werden soll, ob die gesamte vorgesehene Menge des Additivs auf einmal, als kontinuierlicher Strom oder in mehreren zeitlich voneinander separierten Portionen einzuspritzen ist und/oder dergleichen mehr. Mit anderen Worten ist hier also eine noch feinere Aufteilung oder Aufschlüsselung und eine entsprechende detailliertere Zuordnung vorgesehen. Dadurch kann für besonders viele unterschiedliche Fehler eine jeweils besonders geeignete Prüfroutine angewendet werden. Die dies wiederum kann beispielsweise besonders effektiv Ablagerungen oder unverdampfte Ansammlungen des Additivs in einer Abgasanlage des Kraftfahrzeugs oder damit verbundenen Komponenten vermeiden, da beispielsweise die Gutprüfung unterschiedlicher Fehler unterschiedliche Betriebsmuster des Verbrennungsmotors erfordern können. Derartige unterschiedliche Betriebsmuster können zu unterschiedlichen Zeitpunkten während der Funktionsüberprüfung beispielsweise zu unterschiedlichen Temperaturen und/oder unterschiedlichen Aufnahmefähigkeiten des Abgasstroms oder einer entsprechenden Abgasanlage für das Additiv führen. Durch die hier vorgeschlagene Spezifizierung entsprechend unterschiedlicher Prüfroutinen kann diesem Umstand auf besonders einfache und aufwandsarme Weise Rechnung getragen werden, um letztlich besonders effiziente und unproblematische Prüfungen für entsprechend viele unterschiedliche Fehler zu ermöglichen.

In einer weiteren möglichen Ausgestaltung der vorliegenden Erfindung wird die Funktionsüberprüfung im Stillstand des Kraftfahrzeugs im Leerlauf des Verbrennungsmotors durchgeführt und dabei wenigstens ein aktiver Motoreingriff vorgenommen. Ein aktiver Motoreingriff kann im vorliegenden Sinne eine Ansteuerung des Verbrennungsmotors bedeuten, die zu einer Veränderung einer Drehzahl, einer Last, einer Leistungsabgabe, eines Wirkungsgrads, einer Zylindernutzung und/oder dergleichen mehr des Verbrennungsmotors führt. Mit anderen Worten kann die Funktionsüberprüfung hier also als oder im Rahmen einer Standdiagnose des Kraftfahrzeugs durchgeführt werden. Durch den wenigstens einen aktiven Motoreingriff kann besonders einfach und schnell sichergestellt werden, dass die im Rahmen der Funktionsüberprüfung eingebrachte Menge des Additivs tatsächlich aufgenommen, also beispielsweise in der Abgasanlage des Kraftfahrzeugs verdampft werden kann. Dazu kann durch den aktiven Motoreingriff beispielsweise eine vorgegebene Mindesttemperatur im Bereich der Abgasanlage eingestellt oder sichergestellt werden. In der hier vorgeschlagenen Ausgestaltung der vorliegenden Erfindung kann somit letztlich die Gutprüfung nicht nur hinsichtlich der verwendeten Menge des Additivs, sondern auch hinsichtlich eines dafür notwendigen Zeit-, Arbeits- und Kraftstoffaufwands optimiert, also besonders effizient durchgeführt werden, da für die Gutprüfung beispielsweise auf eine Bewegung oder Fahrt des Kraftfahrzeugs verzichtet werden kann. Ebenso kann durch einen derartigen aktiven Motoreingriff gleichzeitig auch eine Diagnose eines Emissionssystems des jeweiligen Kraftfahrzeugs ermöglicht werden.

In einer möglichen Weiterbildung der vorliegenden Erfindung werden durch den wenigstens einen aktiven Motoreingriff unterschiedliche Betriebszustände des Verbrennungsmotors und/oder ein vorgegebener, beispielsweise durch die jeweilige Prüfroutine definierter, Temperaturverlauf, insbesondere des Verbrennungsmotors oder einer daran angeschlossenen Abgasanlage des Kraftfahrzeugs, während der Funktionsüberprüfung eingestellt. Verschiedene Betriebszustände des Verbrennungsmotors in diesem Sinne können beispielsweise ein Rekuperationsbetrieb, ein für einen schnellstmöglichen Temperaturanstieg optimierter Schnellaufheizbetrieb, ein lastfreier Leerlauf, ein Teillastbetrieb, ein Volllastbetrieb und/oder dergleichen mehr sein. Ebenso können als unterschiedliche Betriebszustände unterschiedliche Arbeitspunkte des Verbrennungsmotors eingestellt werden. Dies ermöglicht es ebenso wie die Einstellung des vorgegebenen Temperaturverlaufs, insbesondere in Kombination damit, die jeweilige Funktionsüberprüfung besonders effizient durchzuführen und eine Ansammlung oder Ablagerung von Rückständen des Additivs besonders zuverlässig zu vermeiden.

In einer weiteren möglichen Ausgestaltung der vorliegenden Erfindung wird bei der Durchführung der jeweiligen Funktionsüberprüfung zunächst der Verbrennungsmotor und/oder zumindest eine Komponente einer an diesen angeschlossenen Abgasanlage des Kraftfahrzeugs zum Führen des Abgasstroms auf eine vorgegebene Temperatur gebracht oder über eine vorgegebene Mindesttemperatur hinaus erwärmt, bevor das Additiv im Rahmen der Funktionsüberprüfung in den Abgasstrom eingebracht wird. Auf diese Weise kann die Funktionsüberprüfung besonders effizient und zuverlässig durchgeführt werden, da zum einen sichergestellt werden kann, dass die gesamte eingebrachte Menge des Additivs in bestimmungsgemäßer Weise aufgenommen oder verdampft werden kann und zum anderen die jeweilige durch den Fehler betroffene Funktion oder Komponente in bestimmungsgemäßer Weise bzw. in einem optimalen Zustand betrieben wird. Die vorgegebene Temperatur oder Mindesttemperatur kann dabei insbesondere für einen Katalysator für die selektive katalytische Reduktion gelten. Die Temperatur eines solchen Katalysators kann hinsichtlich der vollständigen bestimmungsgemäßen Nutzung des Additivs und damit letztlich auch hinsichtlich der Effizienz und Folgeproblemfreiheit der Gutprüfung besonders relevant sein.

Ein weiterer Aspekt der vorliegenden Erfindung ist ein Steuergerät für ein Kraftfahrzeug bzw. einen Verbrennungsmotor, insbesondere für ein Kraftfahrzeug. Das erfindungsgemäße Steuergerät weist wenigstens eine Schnittstelle, einen Datenspeicher und eine damit verbundene Prozessoreinrichtung auf. Die wenigstens eine Datenschnittstelle kann dabei zum Erfassen und/oder zum Ausgeben von Daten und/oder Signalen eingerichtet sein. Dies können beispielsweise Daten oder Signale sein, die einen Fehler, einen Funktions- oder Betriebszustand, eine Temperatur und/oder dergleichen mehr für eine oder mehrere Komponenten des Verbrennungsmotors bzw. des Kraftfahrzeugs angeben. Das Steuergerät ist dabei zur, insbesondere automatischen, teilautomatischen oder geführten, Durchführung wenigstens einer Ausgestaltung oder Variante des erfindungsgemäßen Verfahrens eingerichtet. Dazu kann auf dem Datenspeicher beispielsweise ein Programmcode oder Computerprogramm gespeichert sein, das die Verfahrensschritte, Maßnahmen oder Abläufe des entsprechenden Verfahrens repräsentiert, also codiert oder implementiert. Dieses Computerprogramm kann dann zur Durchführung oder zur Veranlassung der Durchführung des entsprechenden Verfahrens durch die Prozessoreinrichtung ausgeführt werden. Dabei können mittels der Prozessoreinrichtung und/oder des Datenspeichers über die Schnittstelle erfasste Daten und/oder Signale verarbeitet werden sowie gegebenenfalls über die Schnittstelle Steuersignale zur Durchführung des Verfahrens und/oder Ergebnisse der Funktionsüberprüfung ausgegeben oder bereitgestellt werden. Das erfindungsgemäße Steuergerät kann also für sämtliche bei der Durchführung des Verfahrens anfallenden elektrischen, elektronischen und/oder logischen Maßnahmen, Abläufe, Diagnoseprozesse und/oder dergleichen mehr eingerichtet sein.

Ein weiterer Aspekt der vorliegenden Erfindung ist ein Kraftfahrzeug, das einen Verbrennungsmotor, eine daran angeschlossene Abgasanlage zum Führen eines Abgasstroms aus dem Verbrennungsmotor, eine Einspritzeinrichtung zum Einbringen eines Additivs in den Abgasstrom und ein erfindungsgemäßes Steuergerät aufweist. Mit anderen Worten kann das erfindungsgemäße Kraftfahrzeug also ebenfalls zur Durchführung des erfindungsgemäßen Verfahrens eingerichtet sein. Das erfindungsgemäße Kraftfahrzeug kann also insbesondere das im Zusammenhang mit dem erfindungsgemäßen Verfahren und/oder im Zusammenhang mit dem erfindungsgemäßen Steuergerät genannte Kraftfahrzeug sein.

Weitere Merkmale der Erfindung können sich aus den Ansprüchen, den Figuren und der Figurenbeschreibung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Kraftfahrzeugs mit einer Abgas-Additiveinspritzung.

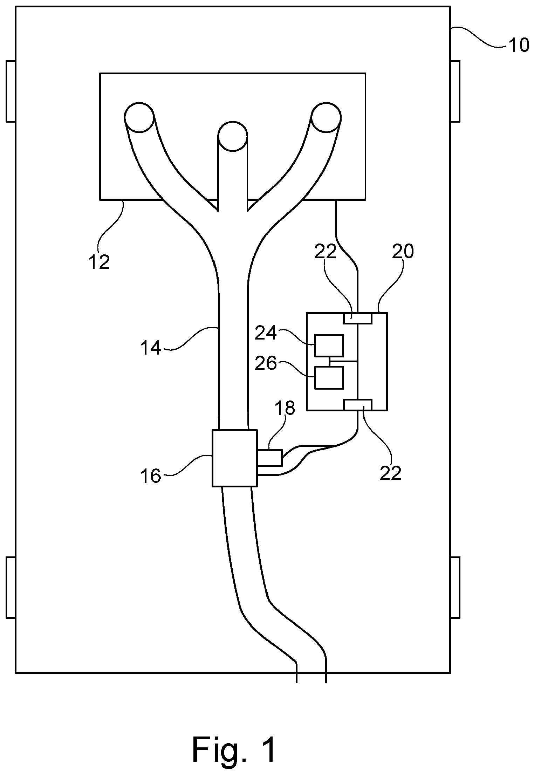

Fig. 1 zeigt eine schematische ausschnittweise Darstellung eines Kraftfahrzeugs 10 mit einer Verbrennungskraftmaschine 12. An diese Verbrennungskraftmaschine 12 ist vorliegend eine Abgasanlage 14 angeschlossen. Diese Abgasanlage 14 umfasst zur Abgasnachbehandlung einen Katalysator 16 mit einem Additivinjektor 18. Mittels des Additivinjektors 18 kann in einen in der Abgasanlage 14 geführten Abgasstrom ein Additiv, beispielsweise ein Reduktionsmittel zur selektiven katalytischen Reduktion, eingebracht werden.

Weiter ist vorliegend ein Steuergerät 20 vorgesehen, das hier beispielhaft über Schnittstellen 22 mit dem Verbrennungsmotor 12, dem Katalysator 16 und dem Additivinjektor 18 verbunden ist. Über diese Verbindungen kann das Steuergerät 20 beispielsweise jeweilige Zustands- und/oder Sensordaten empfangen und/oder jeweilige Steuersignale ausgeben.

Dazu umfasst das Steuergerät 20 vorliegend einen Prozessor 24 und einen damit verbundenen Datenspeicher 26, auf dem ein entsprechendes Betriebsprogramm hinterlegt ist, das durch den Prozessor 24 ausführbar ist. Der Prozessor 24 kann beispielsweise ein Mikrochip, ein Mikrocontroller, ein Mikroprozessor, eine Hardwareschaltung und/oder dergleichen mehr sein oder einen solchen bzw. eine solche umfassen.

Das Kraftfahrzeug 10 bzw. das Steuergerät 20 ist vorliegend für ein Verfahren zur Funktionsüberprüfung einer Funktionalität des Kraftfahrzeugs 10, insbesondere im Zusammenhang mit dem Additivinjektor 18 eingerichtet. Dazu kann das Steuergerät 20 einen Fehler bzw. eine Fehlermeldung erfassen. Beispielsweise im Betrieb des Kraftfahrzeugs 10 während einer regulären Fahrt oder bei einem Werkstattbesuch oder einer Wartung des Kraftfahrzeugs 10 wird dann je nachdem, welcher Fehler oder welche Fehlermeldung erfasst wurde, eine entsprechend fehlerselektiv gestaltete Gutprüfroutine zur Funktionsüberprüfung bestimmt. Verschiedenen gestaltete Gutprüfroutinen können dabei unterschiedliche Mengen von in die Abgasanlage 14 einzubringendem Additiv vorsehen. Die unterschiedlichen Gutprüfroutinen können beispielsweise in dem Datenspeicher 26 hinterlegt und/oder durch das Steuergerät 20 automatisch angepasst werden. Dadurch kann eine Zahl unterschiedlicher Fehler mit im Vergleich zu herkömmlichen Verfahren erheblich verminderter Prüfmenge, also im Rahmen der Anwendung oder Durchführung der Gutprüfroutinen mittels des Additivinjektors 18 in die Abgasanlage 14 eingebrachten Additivs, freigeprüft werden. Insbesondere kann eine entsprechende Diagnose und/oder die Gutprüfroutinen dabei im Rahmen einer Standdiagnose im Motorleerlauf, insbesondere mit einem aktiven Motoreingriff, realisiert werden, um sicherzustellen, dass das Additiv in eine ausreichend warme und für das Additiv aufnahmefähige Abgasanlage 14 in einer jeweils angepassten Menge eingebracht wird.

Kommt also beispielsweise das Kraftfahrzeug 10 in eine Werkstatt und ist beispielsweise in dem Steuergerät 20 bzw. in dem Datenspeicher 26 ein Fehler an dem Additivinjektor 18 bzw. einem SCR-System des Kraftfahrzeugs 10 eingetragen, kann damit die Diagnose und/oder die nach einer Behebung des jeweiligen Fehlers durchzuführende Funktionsüberprüfung mit reduziertem Aufwand, insbesondere mit reduziertem oder angepasstem Einsatz des Additivs, durchgeführt werden.

Dabei kann durch entsprechende Ansteuerung des Verbrennungsmotors 12 bzw. entsprechende Abfrage von Sensorsignalen der Abgasanlage 14 durch das Steuergerät 20 sichergestellt werden, dass der Katalysator 16 eine vorgegebene Mindesttemperatur erreicht hat. Ebenso kann der Katalysator 16 vor dem Einbringen des Additivs im Rahmen der Funktionsüberprüfung zunächst geleert, also beispielsweise von gegebenenfalls vorhandenen Resten, Ablagerungen oder Rückständen des Additivs befreit werden. Damit kann zuverlässig die jeweils vorgesehene Menge des Additivs eindosiert und während der Funktionsüberprüfung in der Abgasanlage 14 bzw. in dem Katalysator 16 vorliegen, sodass ein verfälschender Einfluss auf ein Emissionssystem des Kraftfahrzeugs 10 insgesamt vermieden werden kann.

Die Funktionsüberprüfung kann somit insgesamt besonders effizient sowie ohne Querwirkung auf andere Abläufe ermöglicht bzw. durchgeführt werden. Eine dabei gegebenenfalls vorgesehene Ansteuerung des Verbrennungsmotors 12 kann auf Basis oder gemäß bereits existierenden, herkömmlichen aktiven Standdiagnosen von Motoren und/oder Emissionssystemen erfolgen.

Insgesamt zeigen die beschriebenen Beispiele wie eine Gutprüfroutine für Fehler, insbesondere systemstilllegende Fehler, eines SCR-Systems ohne Ausbau von Hardware oder Komponenten aus einem jeweiligen Fahrzeug realisiert werden kann.

### Bezugszeichenliste

- 10: Kraftfahrzeug
- 12: Verbrennungsmotor
- 14: Abgasanlage
- 16: Katalysator
- 18: Additivinjektor
- 20: Steuergerät
- 22: Schnittstellen
- 24: Prozessor
- 26: Datenspeicher

## Patentansprüche

1. Verfahren zur Funktionsüberprüfung einer Funktionalität eines Kraftfahrzeugs (10) mit einem Verbrennungsmotor (12), bei deren Ausführung im fehlerfreien Normalfall ein Additiv für eine selektive katalytische Reduktion in einen Abgasstrom des Kraftfahrzeugs (10) eingebracht wird, nach Detektion eines Fehlers, bei dem
- in Abhängigkeit von dem jeweiligen Fehler eine für die Funktionsüberprüfung zu verwendende Menge des Additivs anhand einer entsprechenden vorgegebenen Zuordnung, die unterschiedlichen Fehlern unterschiedliche zu verwendende Mengen des Additivs zuordnet, bestimmt wird,
**dadurch gekennzeichnet, dass**
- durch die vorgegebene Zuordnung Fehlern, die eine Dosiermenge und/oder eine Dosiergenauigkeit des Additivs betreffen, eine erste Menge des Additivs zugeordnet wird und Fehlern, die eine Nichteinbringung des Additivs betreffen, eine zweite Menge des Additivs zugeordnet wird, wobei die erste Menge größer ist als die zweite Menge, und
- die Funktionsüberprüfung unter Einbringung der für den jeweiligen Fehler bestimmten Menge des Additivs durchgeführt wird, um zu bestimmen, ob der Fehler weiterhin besteht.

2. Verfahren nach Anspruch 1,
**dadurch gekennzeichnet, dass**
die erste Menge des Additivs zwischen 2 g und 7 g und die zweite Menge des Additivs zwischen 300 mg und 900 mg liegt.

3. Verfahren nach einem der vorhergehenden Ansprüche,
**dadurch gekennzeichnet, dass**
der jeweilige Fehler automatisch in einen Fehlerspeicher (26) eingetragen und erst dann daraus gelöscht oder zur Löschung daraus freigegeben wird, wenn die Funktionsüberprüfung wenigstens eine, insbesondere fehlerabhängige, vorgegebene Anzahl von Malen ergeben hat, dass der jeweilige Fehler nicht mehr vorliegt.

4. Verfahren nach einem der vorhergehenden Ansprüche,
**dadurch gekennzeichnet, dass**
für die Fehler ein jeweils zugeordneter Fehlercode in einem Fehlerspeicher (26) eingetragen wird und die Zuordnung der zu verwendenden Menge des Additivs anhand dieses Fehlercodes erfolgt.

5. Verfahren nach einem der vorhergehenden Ansprüche,
**dadurch gekennzeichnet, dass**
die Zuordnung unterschiedlichen Fehlern jeweils eine von mehreren vorgegebenen unterschiedlichen Prüfroutinen zuordnet, die sich nicht nur hinsichtlich der zu verwendenden Menge des Additivs voneinander unterscheiden, sondern auch hinsichtlich einer Einspritzprozedur für das Additiv, eines Massenstroms des Additivs während der Anwendung der jeweiligen Prüfroutine, einer Einspritzfrequenz des Additivs und/oder einer Aufteilung der zu verwendenden Menge des Additivs auf mehrere Einspritzvorgänge während der Anwendung der jeweiligen Prüfroutine.

6. Verfahren nach einem der vorhergehenden Ansprüche,
**dadurch gekennzeichnet, dass**
die Funktionsüberprüfung im Stillstand des Kraftfahrzeugs (10) im Leerlauf des Verbrennungsmotors (12) durchgeführt und dabei wenigstens ein aktiver Motoreingriff vorgenommen wird.

7. Verfahren nach Anspruch 6,
**dadurch gekennzeichnet, dass**
durch den wenigstens einen aktiven Motoreingriff unterschiedliche Betriebszustände des Verbrennungsmotors (12) und/oder ein vorgegebener Temperaturverlauf während der Funktionsüberprüfung eingestellt werden.

8. Verfahren nach einem der vorhergehenden Ansprüche,
**dadurch gekennzeichnet, dass**
bei der Durchführung der Funktionsüberprüfung zunächst der Verbrennungsmotor (12) und/oder zumindest eine Komponente (16, 18) einer an diesen angeschlossenen Abgasanlage (14) des Kraftfahrzeugs (10) zum Führen des Abgasstroms, insbesondere ein Katalysator (16), zumindest auf eine vorgegebene Temperatur gebracht wird, bevor das Additiv in den Abgasstrom eingebracht wird.

9. Steuergerät (20) für ein Kraftfahrzeug (10), aufweisend eine Schnittstelle (22), einen Datenspeicher (26) und eine damit verbundene Prozessoreinrichtung (24), wobei das Steuergerät (20) zur Durchführung eines Verfahrens nach einem der vorhergehenden Ansprüche eingerichtet ist.

10. Kraftfahrzeug (10), aufweisend einen Verbrennungsmotor (12), eine daran angeschlossene Abgasanlage (14) zum Führen eines Abgasstroms, eine Einspritzeinrichtung (18) zum Einbringen eines Additivs in den Abgasstrom und ein Steuergerät (20) nach Anspruch 9.

## Claims

1. Method for the functional inspection of a functionality of a motor vehicle (10) having a combustion engine (12), in which, when it is executed in the fault-free normal case, an additive for a selective catalytic reduction is introduced into an exhaust gas flow of the motor vehicle (10), following detection of a fault, in which
- depending on the respective fault, an amount of the additive to be used for the functional inspection is determined based on a corresponding predefined assignment that assigns different amounts of the additive to be used to different faults,
**characterized in that**
- as a result of the predefined assignment, a first amount of the additive is assigned to faults that concern a dosing amount and/or a dosing accuracy of the additive and a second amount of the additive is assigned to faults that concern the lack of introduction of the additive, wherein the first amount is greater than the second amount, and
- the functional check is performed by introducing the amount of the additive determined for the respective fault in order to determine whether the fault is still present.

2. Method according to Claim 1,
**characterized in that**
the first amount of the additive is between 2 g and 7 g and the second amount of the additive is between 300 mg and 900 mg.

3. Method according to either of the preceding claims, **characterized in that**
the respective fault is entered automatically into a fault memory (26) and is erased therefrom or permitted to be erased therefrom only when the functional inspection has revealed, at least a number of times that is predefined in particular depending on the fault, that the respective fault is no longer present.

4. Method according to one of the preceding claims, **characterized in that**
a respectively assigned fault code is entered in a fault memory (26) for the faults and the assignment of the amount of the additive to be used is carried out on the basis of this fault code.

5. Method according to one of the preceding claims, **characterized in that**
the assignment assigns in each case one of multiple predefined different test routines to different faults, these test routines differing from one another not only in terms of the amount of the additive to be used, but also in terms of an injection procedure for the additive, a mass flow of the additive during the application of the respective test routine, an injection frequency of the additive and/or a distribution of the amount of the additive to be used among multiple injection procedures during the application of the respective test routine.

6. Method according to one of the preceding claims, **characterized in that**
the functional check is performed while the motor vehicle (10) is stationary and the combustion engine (12) is idling and in the process at least one active motor intervention is carried out.

7. Method according to Claim 6,
**characterized in that**
the at least one active motor intervention is used to set different operating states of the combustion engine (12) and/or a predefined temperature profile during the functional inspection.

8. Method according to one of the preceding claims, **characterized in that**
when the functional inspection is performed, the combustion engine (12) and/or at least one component (16, 18) of an exhaust gas system (14), connected thereto, of the motor vehicle (10) for carrying the exhaust gas flow, in particular a catalytic converter (16), is first brought at least to a predefined temperature before the additive is introduced into the exhaust gas flow.

9. Controller (20) for a motor vehicle (10), having an interface (22), a data memory (26) and a processor device (24) connected thereto, wherein the controller (20) is configured to perform a method according to one of the preceding claims.

10. Motor vehicle (10), having a combustion engine (12), an exhaust gas system (14) connected thereto for carrying an exhaust gas flow, an injection device (18) for introducing an additive into the exhaust gas flow and a controller (20) according to Claim 9.

## Revendications

1. Procédé de contrôle du fonctionnement d'une fonctionnalité d'un véhicule automobile (10) comprenant un moteur à combustion interne (12), lors de la mise en œuvre duquel, dans le cas normal sans défaut, un additif permettant une réduction catalytique sélective est introduit dans un flux de gaz d'échappement du véhicule automobile (10), après détection d'un défaut, selon lequel
- en fonction du défaut respectif, une quantité de l'additif à utiliser pour le contrôle du fonctionnement est déterminée sur la base d'une association prédéfinie correspondante, qui associe à des défauts différents des quantités différentes de l'additif à utiliser, **caractérisé en ce que**
- grâce à l'association prédéfinie, une première quantité d'additif est associée aux défauts qui concernent une quantité de dosage et/ou une précision de dosage de l'additif et une deuxième quantité d'additif est associée aux défauts qui concernent une non-introduction de l'additif, la première quantité étant supérieure à la deuxième quantité, et
- le contrôle du fonctionnement est effectué en introduisant la quantité d'additif déterminée pour le défaut respectif, afin de déterminer si le défaut persiste.

2. Procédé selon la revendication 1,
**caractérisé en ce que** la première quantité d'additif se situe entre 2 g et 7 g et la deuxième quantité d'additif se situe entre 300 mg et 900 mg.

3. Procédé selon l'une des revendications précédentes, **caractérisé en ce que** le défaut respectif est enregistré automatiquement dans une mémoire de défauts (26) et n'est effacée de celle-ci ou émise à des fins d'effacement de celle-ci que lorsque le contrôle du fonctionnement a indiqué au moins un nombre de fois prédéfini, en particulier d'une manière qui dépend du défaut, que le défaut respectif n'est plus présent.

4. Procédé selon l'une des revendications précédentes, **caractérisé en ce que**, pour les défauts, un code de défaut respectivement associé est enregistré dans une mémoire de défauts (26) et **en ce que** l'association de la quantité d'additif à utiliser est effectuée sur la base dudit code de défaut.

5. Procédé selon l'une des revendications précédentes, **caractérisé en ce que** l'association associe respectivement à différents défauts l'une de plusieurs routines de contrôle différentes prédéfinies, qui se distinguent les unes des autres non seulement en ce qui concerne la quantité à utiliser de l'additif, mais également en ce qui concerne une procédure d'injection de l'additif, un débit massique de l'additif pendant l'application de la routine de contrôle respective, une fréquence d'injection de l'additif et/ou une répartition de la quantité à utiliser de l'additif sur plusieurs opérations d'injection pendant l'application de la routine de contrôle respective.

6. Procédé selon l'une des revendications précédentes, **caractérisé en ce que** le contrôle du fonctionnement est effectué à l'arrêt du véhicule automobile (10) au ralenti du moteur à combustion interne (12), et **en ce qu'**au moins une intervention active sur le moteur est alors effectuée.

7. Procédé selon la revendication 6,
**caractérisé en ce que**, grâce à ladite au moins une intervention active sur le moteur, différents états de fonctionnement du moteur à combustion interne (12) et/ou une courbe de température prédéfinie sont réglés pendant le contrôle du fonctionnement.

8. Procédé selon l'une des revendications précédentes, **caractérisé en ce que**, lors de la mise en œuvre du contrôle du fonctionnement, le moteur à combustion interne (12) et/ou au moins un composant (16, 18) d'un système d'échappement (14) du véhicule automobile (10) raccordé à celui-ci pour guider le flux de gaz d'échappement, en particulier un catalyseur (16), est/sont tout d'abord amené (s) au moins à une température prédéfinie avant que l'additif ne soit introduit dans le flux de gaz d'échappement.

9. Appareil de commande (20) destiné à un véhicule automobile (10), comportant une interface (22), une mémoire de données (26) et un dispositif à processeur (24) relié à celle-ci, l'appareil de commande (20) étant conçu pour mettre en œuvre un procédé selon l'une des revendications précédentes.

10. Véhicule automobile (10), comportant un moteur à combustion interne (12), un système d'échappement (14) raccordé à celui-ci pour guider un flux de gaz d'échappement, un dispositif d'injection (18) destiné à introduire un additif dans le flux de gaz d'échappement et un appareil de commande (20) selon la revendication 9.
